# EUROPEAN PATENT SPECIFICATION

(11) **EP 2 279 876 B1**
(45) Date of publication and mention of the grant of the patent: **07.08.2013**
(21) Application number: 10382103.9
(22) Date of filing: 30.04.2010
(51) Int. Cl.: B41M 5/26, B60R 13/00, B23K 26/02

(54) **Installation for marking decorative and/or indicative motifs on vehicle parts by projecting a laser beam, and process therefor**
Installation zum Aufbringen von dekorativen und/oder hinweisenden Motiven auf Fahrzeugteile durch Laserstrahlprojektion sowie Verfahren zur Verwendung in der Installation
Installation pour fournir des motifs decoratifs et/ou indicatifs aux parties de véhicule en projétant un rayon laser, et procédé correspondant

(30) Priority: 31.07.2009 ES 200930544
(43) Date of publication of application: 02.02.2011
(73) Proprietor: GRUPO ANTOLIN-INGENIERIA, S.A., 09007 Burgos (ES)
(72) Inventor: Torres Heras, Rubén, 09007 Burgos (ES); Sánchez Lite, Alberto, 47007 Valladolid (ES); González Rodríguez, Ignacio, 09006, Burgos (ES)
(74) Representative: Capitán García, Maria Nuria

(56) References cited:
- EP-A2- 1 852 208
- EP-B1- 1 401 669
- DE-A1-102007 048 471
- JP-A- 61 060 287
- US-A- 4 520 261
- US-A- 4 710 604
- US-A- 5 450 147
- US-A- 6 000 801
- US-B1- 6 501 061

## Description

### OBJECT OF THE INVENTION

The present invention relates to an installation for marking decorative and/or indicative motifs on vehicle parts by projecting a laser beam, and particularly to an installation for carrying out the marking in an automated manner with minimal operator presence.

In addition, the present invention relates to a marking process by projecting a laser beam for use in the marking installation by projecting a laser beam.

The invention involves the use of means for detecting the laser beam that detect whether the relative position of the support means with respect to the means for generating and orienting the laser beam is correct, as compared to a theoretical relative position of reference, and therefore also the position of the part placed on said support means.

### BACKGROUND OF THE INVENTION

The use of finishes consisting of decorative and/or indicative markings on vehicle parts that are visible to users is common in both internal and external parts of vehicles. These finishes can have a merely decorative function, meant to improve the external appearance of the part, or an indicative function, such as the word "airbag" indicating the presence of this item in the vehicle.

An example of this type of vehicle parts visible to users are the exposed parts of vehicle interiors, such as trimmings of roofs, doors, dashboards or posts, or functional parts such as sun visors or hubcaps on the exterior of the vehicle.

All of these parts have in common that they must provide an aesthetic and/or functional appearance when an indicative mark is needed to indicate an element in the part, as at least one of the faces of these parts is visible to the user.

The appearance of these parts is determined either by the use of a coating applied on the main support that makes up the part, such as a fabric, a non-fabric, a non-woven fabric or a film, or by the finish of the support that makes up the part which, in its manufacturing process, can receive an aesthetic and/or functional marking on the face that is exposed or will be visible to the vehicle user in order to improve its external appearance or provide some type of information.

On another hand, the appearance of these parts can be improved or modified by marking decorative and/or indicative motifs on the exposed face of the part, either on the coating element if the part has a coating or on the exposed face, if no additional coating element is used.

Several marking techniques are known for this type of parts that use controlled heating of the surface of the parts by projecting a laser beam on their surface. One known example is described in patent document EP1401669 .

The main difficulty of applying decorative and/or indicative motifs with a laser beam on three-dimensional parts, and particularly on automobile parts in which finish requirements are very strict and cycle times are very short, is ensuring a high repeatability such that the motif marked on the part is in the correct position, is complete, homogeneous, etc

The marking parameters can be controlled automatically by providing control means in the marking installation. However, there are variables external to the marking process that cannot be controlled with the control means only, such as loss of transparency due for example to dust gathering on the lenses of the laser beam generation and orientation means, or the degradation of the material of these lenses, or the displacement of the relative position of the part to be marked with respect to the marking installation, any of which will lead to a defective result and the corresponding rejection of the part.

This difficulty is increased when a high automation of the installation is desired, where for example the presence of an operator performing visual control is minimal and only for routine installation control tasks.

Therefore, to ensure a high productivity in an automated manner and a high repeatability, the installation must be provided with means that allow supervising the marking process in real-time and if necessary acting, in addition to the variables of the process itself, on other external variables that may affect this marking process that are out of the scope of the installation control means.

In order to achive it, patent document DE 102007048471 A1 discloses a method and an installation according to the preambles of claims 8 and 1, respectively, which comprises laser means and support means for holding the part to be marked for determining a position of a focused laser beam which comprises means for detecting whether the relative position of the support means with respect to the laser means is correct with respect to a theorical relative position of reference, based on the incidence of the laser beam on at least said two detection means located at positions previously foreseen for this purpose.

### DESCRIPTION OF THE INVENTION

In view of the above, the present invention relates to an installation for marking decorative and/or indicative motifs on vehicle parts by projecting a laser beam according to claim 1.

In addition, the invention relates to a process according to claim 8.

By the theoretical relative position of reference is meant the position of the support means with respect to the means for generating and orienting the laser beam, which is defined in a stage prior to initiating a marking process, and which ensures that the position of said support means and therefore of the part held in them is correct for guaranteeing a good finish of the part. The parameters of the theoretical relative position of reference are defined on the installation control means in said stage prior to the marking process.

The use of means for detecting the laser beam placed on the support means allow, on one hand, detecting any loss of the position of said support means that hold the part to mark with the laser beam emitted by the laser-beam generation and orientation means, thereby ensuring that the position of these support means is correct and therefore that the decorative/indicative motif will be marked in the correct position of the part.

On another hand, a second added function of the laser beam detection means is to measure the intensity of the laser beam emitted by the laser beam generation and orientation means, verifying that its value is correct with respect to the predetermined parameters such that the part is marked in an optimal fashion.

Moreover, an additional function is to use one of the means for detecting the laser beam to ensure that the marking of the decorative and/or indicative motif has been completed.

Therefore, the characteristics of the installation of the invention allow automating the process, checking in real time one hundred percent of the marked parts, checking the position at certain predetermined points of the support means and thereby allowing the early detection of positioning errors or a poor quality of the laser marking, which are the minimum requirements for ensuring a correct marking process, such that the presence of an operator supervising the process at all times is not necessary.

The details of the configuration corresponding to dependent claims 2 to 16 are also considered included by reference in this description.

### DESCRIPTION OF THE DRAWINGS

The present descriptive memory is completed by a set of drawings that illustrate the preferred embodiment and in no way limit the invention.
Figure 1 shows a perspective view of the laser marking installation before starting the marking process and an enlarged view of the head that forms the means for generating and orienting the laser beam.
Figure 2 shows a perspective view of the laser marking installation in a stage of the marking process in which the laser beam impinges on a first detection means.
Figure 3 shows a perspective view of the laser marking installation in a stage of the marking process in which the laser beam impinges on a second detection means.
Figure 4 shows a perspective view of the laser marking installation in a stage of the marking process in which the laser beam impinges on the part to be marked in order to apply the motif.
Figure 5 shows a perspective view of the laser marking installation in a stage of the marking process in which the laser beam impinges on a third detection means.
Figure 6 shows a perspective view of the laser marking installation once the marking process has been completed.

### DETAILED DESCRIPTION OF THE INVENTION

In view of the above, the present invention relates to an installation (1) and process for marking a decorative and/or indicative motif (7) on a vehicle part (5) by projecting a laser beam (2.1), in which are provided means (3.2) for detecting the laser beam (2.1) located in the support means (3) of the part (5) to be marked.

The means (3.2) for detecting the laser beam (2.1) are formed by at least two means (3.2) for detecting the laser beam (2.1), which ensure both the correct position of said support means (3) that hold the part (5) to be marked in the marking process and thus the correct position of the part (5) to be marked itself, and the quality of the laser beam (2.1) generated by the means (2) for generating and orienting a laser beam (2.1), or checking that the motif (7) to be marked has been fully completed.

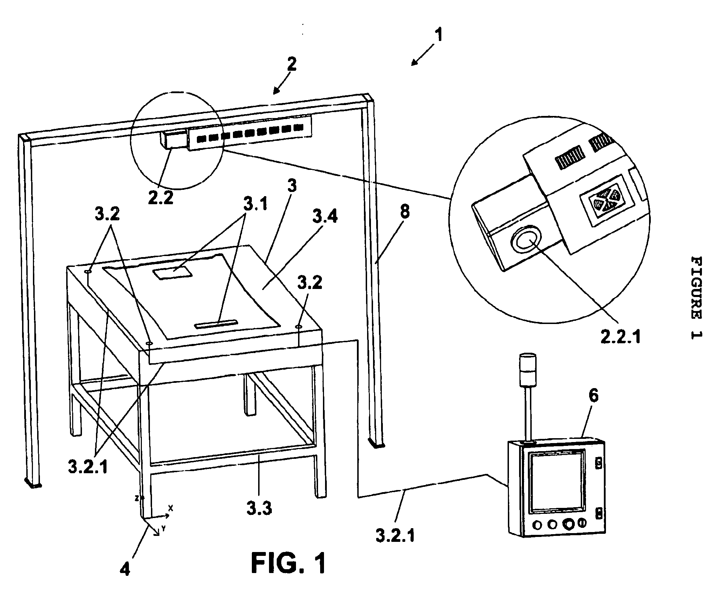

The installation (1), according to a preferred embodiment of the invention, is formed as shown in figure 1 by a means (2) for generating and orienting a laser beam (2.1) that consist of a fixed laser beam generator installed on an also fixed support (8), facing the support means (3) of the part (5) to be marked, and an orientation system that can orient and focus the laser beam (2.1) from the generator to the point of each part (5) to be marked at each instant.

Although the figures show the means (2) for generating and orienting the laser beam (2.1) as being fixed and installed on a support (8) by way of example, other configurations such as installation on an articulated arm are possible.

The means (2) for generating and orienting the laser beam (2.1) allow marking in a horizontal, vertical and oblique position. By way of example, the laser marking installation (1) of the invention can cover different sizes of working fields according to the size of the parts (5) to mark, such as 300x300 mm in the case of small parts (5) as a post or sun visor or up to 3000x3000 mm in the case of a roof trim.

The means (2) for generating and orienting the laser beam (2.1) of the invention can also correspond to a pulsed CO₂ laser, which allows working with different pulses and power formats which, along with other modifiable parameters such as the start-up delay, shut-down delay, marking delay etc. allow controlling the power applied in the marking process with the output laser beam (2.1).

These parameters are entered by specialised software in the control means (6); in the same way are entered data on the path followed by the laser beam in the marking process, together allowing to reproduce the motif (7) to be marked on the part (5).

The software of the control means (6) can interpret these data (7) and translate them into a series of laser pulses along the predefined path, allowing to reproduce the motif (7) on the part (5) to be marked.

In the case of a marking installation (1) with laser (2) as that shown in the figures, of the type having a fixed position and installed on a fixed support (8) such as an overhead frame, the laser beam (2.1) emerging from the laser generator is focussed on the specific location of the motif (7) to be marked at a specific time using a set of lenses and mirrors (not shown), which in addition allows controlling the area of incidence of the laser beam (2.1), understanding as such the area of the surface to be marked that at a given instant is under the action of the laser beam.

As the final area of incidence of the laser beam (2.1) has a cross-section of variable size depending on the unit configuration, the distance to the light source and the angle of incidence, the area of this area of incidence will depend on the relative position between the marking point and the position of the light source used to generate the laser beam (2.1), and therefore so will the energy concentration per unit surface area applied at this area of incidence.

After the laser beam (2.1) has been generated and focussed, it is oriented towards a head (2.2) fitted with a set of mirrors and lenses (not shown) which orient the laser beam (2.1) at each instant of the marking process towards the point to be marked, according to the programmed path, controlling the horizontal and vertical motion of the laser beam (2.1) in the working field.

As a result, the part (5) is marked by controlled heating until its surface material is partially modified either by burning, melting or sublimation.

Having described the operation of the means (2) for generating and orienting the laser beam (2.1) and the control means (6) that regulate the marking parameters for said means (2) for generating and orienting the laser beam (2.1), the remaining elements that form part of the installation (1) will be described.

As shown in figure 1, the installation (1) has support means (3) for positioning the part (5) to be marked formed for example by a frame (3.3) that holds a cradle (3.4) in which the part (5) to be marked is held.

Positioning the part (5) to be marked is one of the most critical tasks in the marking process, as a deviation of the part (5) with respect to its theoretical relative position of reference will result in an error in the marking of the part (5), both due to the misplacement of the position of the motif (7) to mark and to potential misfocussing and therefore deviations from the intensity of incidence of the laser beam (2.1) on the part (5) to mark, producing a defective result and therefore its rejection.

To guarantee the position of the part (5) with respect to the marking means (2), the part (5) is positioned on the support means (3) by some first referencing means (3.1) such as centering items placed on the support means (3) or by taking advantage of the specific shape of the part (5).

These centering items, as shown in figure 1, can consist of protrusions that emerge from the cradle (3.4) that holds the part (5) and fit in orifices of the part (5) to mark, such as orifices (5.1) meant for subsequent installation of other elements, such as mirrors, lighting elements, compartments for storing objects, etc. or rest on specific points of the perimeter of the part (5) to be marked.

The first referencing means (3.1) of the part (5) on the support means (3) therefore ensure the correct positioning of the part (5) with respect to said support means (3).

The task would then remain of referencing the support means (3) with respect to the means (2) for generating and orienting the laser beam (2.1). For this purpose, second referencing means (4) are provided in charge of referencing the support means (3) with respect to the means (2) for generating and orienting the laser beam (2.1). In the figures, the second referencing means (4) are shown schematically by representing the coordinate system (x, y, z); however, these referencing means could be simply some marks on the floor on which the support means (3) are placed.

The position of these support means (3) with respect to the means (2) for generating and orienting the laser beam (2.1) is determined before starting the marking cycle of a set of parts (5). Therefore, in ideal conditions the marking process of the parts (5) must be controlled regarding the position and other variables such as intensity of the beam (2.1), speed, mark thickness, etc. that are controlled by the control means of the means (2) for generating and orienting the laser beam (2.1).

However, there are variables external to the process that can affect the normal progress of the marking process that the control means (6) cannot control, and which are present in any real manufacturing process. Therefore, in order to automate a process, in this case the marking process, it is necessary to take into account these external variables and provide means for detecting them that allow stopping the process or changing its parameters in real time, to minimise the marking defects on the parts (5) to mark.

These external variables can be, for example, displacement of the support means (3) caused, for example, by collision with an operator or any other external element.

Another external variable can be the dirt accumulated on the lenses, which affects the intensity of the laser beam (2.1) so that it is different from the intensity originally programmed in the control means (6).

Another external variable can be the fact that the marking process on the part (5) has not finished, so that the motif (7) is not complete.

These external variables cannot be detected by the control means, which therefore requires providing a control system that implements additional control measures to allow automating the marking process such that the presence of an operator can be minimal, allowing to check that, for each part (5) marked, the minimum position and laser beam quality references are maintained to ensure a correct marking.

A first control measure carried out by the installation (1) is checking the displacement of the part (5) from its theoretical relative position of reference.

For this purpose, the installation (1) is able to detect the position of the part (5) during the marking process. This position can be detected on a plane, assuming that the support means (3) are always resting on the same fixed plane, by detecting the position of two predefined points of the support means (3), or in space, determining the position of three predefined points of the support means (3) that are not aligned with each other.

In addition, this verification can be performed before or after marking the part (5).

An additional control measure to be executed by the installation (1) can be checking the intensity of the laser beam (2.1) compared to the predefined intensity, to ensure a correct marking of the motif (7) on the part (5).

The working intensity check can be performed before and/or after marking the part (5) with the corresponding motif (7).

A third control measure to be performed by the installation (1) can be checking that the motif (7) marked on the part (5) has been completed in full.

This check can be performed only after the marking process of the motif (7) on the part (5) has finished.

To perform these additional control measures that regulate the marking process despite the existence of the above-discussed external variables, means (3.2) for detecting the laser beam (2.1) have been foreseen that can consist of at least two detection means (3.2), a first detection means (3.2) for the laser beam (2.1) and a second detection means (3.2) for the laser beam (2.1), both detection means (3.2) being located and mounted on the support means (3), each one in a different position.

The means (3.2) for detecting the laser beam (2.1) can detect the incidence of said laser beam (2.1) by detecting variables associated to the action of the laser beam (2.1) on the point of incidence, such as the temperature reached at this point at a given time or the rate at which this temperature changes, if the detection means (3.2) is a temperature sensor such as a thermocouple, or the light intensity, if the detection means (3.2) is a light intensity sensor such as a photometer measuring the light intensity of the laser beam (2.1), etc.

As an option and as a specific case that improves the basic configuration, the support means (3) can comprise a third detection means (3.2) located such that its position is not on the same imaginary straight line defining the points of the other two detection means (3.2), so that the three define a geometrical plane with a known position, thereby allowing the control means (6) to determine in a more accurate manner whether the spatial position of the support means (3) is maintained with respect to the theoretical relative position of reference, and therefore that of the part (5) to be marked.

Thus, to carry out the control measures determined by the external variables, and after defining both the control measures and the detection means (3.2) foreseen for checking these parameters, the path defined by the marking process of the motif (7) on the part (5) is completed by additional segments followed by the laser beam (2.1) that allow carrying out these control measures, according to the specific instant of the marking process defined in which the laser beam (2.1) impinges on the detection means (3.2), thereby performing these verifications.

The simplest path followed by the laser beam (2.1) consists of two segments (A and B).

A first segment (A) of this path is defined by the incidence of the laser beam (2.1) on the detection means (3.2) before starting the marking process of the motif (7) on the part (5).

A second segment (B) of the trajectory is defined by the incidence of the laser beam (2.1) on the part (5) to mark the motif (7) on it.

A second possible path followed by the laser beam (2.1) is defined by three segments.

A first segment (A) of the path is defined by the incidence of the laser beam (2.1) on at least one of the detection means (3.2) provided before starting the process of marking the motif (7) on the part (5).

A second segment (B) of the path is defined by the incidence of the laser beam (2.1) on the part (5), in order to mark the motif (7) on it.

Finally, the third segment (C) of the path followed by the laser beam (2.1) is defined by its incidence on at least one of the detection means (3.2) foreseen, once the process for marking the motif (7) on the part has finished.

Therefore, using the incidence of the laser beam (2.1) on the detection means (3.2) in different segments of the path defined, the control means (6) are able to know, for example, the relative position of the support means (3) with respect to the means (2) for generating and orienting the laser beam (2.1) compared to the theoretical relative position of reference, and thereby determine whether the actual part (5) to be marked has moved from said theoretical relative position of reference, whether the intensity of the laser beam (2.1) is correct or whether the marking process of the motif (7) on the part (5) has been completed.

The means (3.2) for detecting the laser beam (2.1) detect the position of the support means (3) by the incidence of the laser beam (2.1) on each of the two detection means (3.2), so that the information obtained by the incidence of the laser beam (2.1) on each detection means (3.2) is sent to the control means (6) via connection means (3.2.1) such as a cable that connects each of the detection means (3.2) to the control means (6).

When the information from each detection means (3.2) has been received, the control means (6) check whether the information generated by the laser beam (2.1) is as expected in intensity, time and position, and thereby determine in addition whether the position of the support means (3) and therefore of the part (5) to be marked matches the theoretical relative position of reference, or whether it has suffered a displacement, as well as whether the intensity of the laser beam (2.1) is correct. If there has been a displacement of the position the control means (6) will act, for example, by stopping the marking process.

The reason for using at least two detection means (3.2) is the need for two points of reference at least to define the position of the support means (3) on the plane on which these support means (3) rest.

If it is necessary to locate the reference means in space, three reference points not aligned with each other will be needed, and therefore three detection means (3.2) for the laser beam (2.1) corresponding to these points.

In addition, as an optional configuration the detection means (3.2) detect the intensity of the laser beam (2.1) once it impinges on at least one of the detection means (3.2). This allows checking whether the working intensity of the means (2) for generating and orienting the laser beam (2.1) is correct, according to the process parameters initially defined.

To check that the intensity of the laser beam (2.1) is correct a single detection means (3.2) is necessary, such that the intensity is measured along a first segment A of the path of laser beam (2.1) before starting the marking process itself, or along a third segment C of the path after completing the marking process as a final check.

However, to check that the intensity of the light beam (2.1) remains within the values foreseen throughout the marking process, it is necessary for the detection means (3.2) to carry out the intensity measurement along two different segments of the path, a first segment (A) and a third segment (C), so that the incidence of the laser beam (2.1) can be established with different detection means or a single detection means (3.2) on which the laser beam (2.1) impinges at two different times of the marking process.

On another hand, the means (3.2) for detecting the laser beam (2.1) that detect the end of the marking process of the motif (7) on the part (5) by the incidence of the laser beam (2.1) on at least one of the detection means (3.2) is performed along the segment (C) of the path, this is, once the marking process on the part (5) performed in segment (B) has finished.

When the laser beam (2.1) impinges on said detection means (3.2), these means send a command to the control means (6), which recognise that the operation of marking the motif (7) on the part (5) has ended.

This parameter is especially relevant when the motif (7) to mark consists of a complex figure, so that it is impossible or difficult for an operator to identify at a glance whether the marking of the motif (7) on the part (5) is complete.

Therefore, depending on the number of detection means (3.2) used in the installation (1) and on the segments that define the path to be followed by the laser beam (2.1), it is possible to detect several external variables that will affect both the correct location of the motif (7) to be marked on the part (5) and the quality of the marking.

By way of example, the figures show an installation (1) with three detection means (3.2): a first detection means (3.2) and a second detection means (3.2), on which the laser beam (2.1) impinges along a first segment A of the path corresponding to the preliminary reference-checking stage before starting the process of marking the part (5) as such; and a third detection means (3.2) of the laser beam (2.1) such that the latter impinges on said third detection means (3.2) at the end of the marking process and along a third segment C of the path such that point of this segment on which the laser beam (2.1) impinges is located on the latter detection means (3.2), after the marking process of the part (5) has finished.

The path followed by the laser beam (2.1) is completed by a second segment B in which the marking process itself is performed, so that along this segment B the laser beam (2.1) passes over all the points of the surface of the part (5) to be marked, generating the motif (7) on it.

Therefore, in the first segment (A) of the path the position of the support means (3) with respect to the means (2) for generating and orienting the laser beam (2.1) is compared to the theoretical relative position of reference, therefore checking whether the position of the part (5) to mark with respect to said means (2) for generating and orienting the laser beam (2.1) is correct.

In addition, in the first segment (A) of the path it is possible to check other variables needed to guarantee the quality of the marking, such as the intensity of the laser beam (2.1).

This check is performed by making the laser beam (2.1) impinge on one of the detection means (3.2) along the said first segment (A) of the path.

In addition, in the third segment of the path (C) it is checked that the motif (7) marked on the part (5) has been completed.

This check is performed by making the laser beam (2.1) impinge on the third detection means (3.2) along said third segment (C) of the path.

In this third segment it is also possible to check the intensity of the laser beam (2.1), either to check whether this parameter was adequate during the marking process, if this measurement was not carried out on segment (A) of the path, or to check in this segment (C) whether the intensity remained constant throughout the marking process, if this measurement was made on segment (A).

In this last case, the check is performed by comparing the two intensity readings, the one before starting the marking process in segment (A) and the one after finishing the marking process of part (5) in segment (C).

Other possible examples of the marking installation (1), not shown, can be the following:

A first example can be an installation (1) that checks the position of the support means (3) in their support plane and the intensity of the laser beam (2.1), as parameters liable to be affected by external variables.

To do so, two detection means (3.2) are used and a path is defined with two segments, a first segment (A) for checking the parameters that can be affected by external variables by the incidence of the laser beam (2.1) on the detection means (3.2) and a second segment (B) in which the laser beam (2.1) impinges on the part (5) to be marked, this is, the segment in which the marking process itself is carried out.

In this case it is checked before starting the marking process whether the position of the support means (3) is correct in the support plane, so that it has not undergone undesired displacements.

This check is performed by making the laser beam (2.1) impinge on a first detection means (3.2) and then on a second detection means (3.2) along said segment (A) of the path.

It can also be checked whether the intensity of the laser beam (2.1) before starting the process corresponds to the predefined intensity. This check can be performed by making the laser beam (2.1) impinge on a first detection means (3.2) or on a second detection means (3.2).

A second example, not shown, can be an installation (1) that checks the position of the support means (3) in the support plane, the intensity of the laser beam (2.1) and the completion of the marking process, as parameters that can be affected by external variables.

To do so two detection means (3.2) are used and a path is defined divided into three segments, a first segment (A) for checking parameters by the incidence of the laser beam (2.1), a second segment (B) in which the laser beam (2.1) impinges on the part to be marked, this is, the segment in which the marking process itself is performed, and a third segment (C) for checking parameters by the incidence of the laser beam (2.1).

In this case it can be checked whether the intensity of the laser beam (2.1) matches the predefined intensity, for example, before starting the marking process.

This check is performed by making the laser beam (2.1) impinge on a first detection means (3.2) along a first segment (A) of the path.

Similarly, this intensity measurement can also be checked after completing the marking process, this is, on the segment (C) of the path, and by making the laser beam (2.1) impinge on a first detection means (3.2) or on a second detection means (3.2).

In addition, this configuration of the installation (1) allows checking whether the intensity remains constant throughout the process by measuring and comparing the intensities before and after the marking process performed in segment (B) of the path, this is, by measuring and comparing the intensity both in segment (A) and in segment (C) of the path.

It is also checked whether the position of the support means (3) in their support plane, and therefore that of the part (5) to be marked, is correct.

This check is performed by making the laser beam (2.1) impinge on the two detection means (3.2), for example making it impinge on a first detection means (3.2) along the first segment (A) of the path, combined with making the laser beam (2.1) impinge on a second detection means (3.2) in a third segment (C) of the path, so that it can be known whether the position of the marked part (5) is correct after completing the process of marking the part (5).

Finally, by making the laser beam (2.1) impinge on a first detection means (3.2) or on a second detection means (3.2) along the segment (C) of the path, it is possible to check whether the marking of the motif (7) on the part (5) has been completed.

A third example, not shown, can be an installation (1) which checks the position of the support means (3) in the support plane and the intensity of the laser beam (2.1), as parameters liable to be affected by external variables.

To do so three detection means (3.2) are disposed and a path is defined composed of two segments, a first segment (A) in which parameters are checked and a second segment (B) corresponding to the marking process.

In this case it is possible to check whether the position of the part (5) is correct with respect to both the support plane of the support means (3) and in space, as the laser beam (2.1) impinges on three separate detection means (3.2) not aligned with each other.

It is also checked whether the intensity at the start of the marking process is correct, so that it matches the predefined intensity for marking the part (5).

A fourth example of the installation (1) is that in which it checks the position of the support means (3) on their support plane, the intensity of the laser beam (2.1) and the completion of the marking process, as parameters liable to be affected by external variables.

This fourth example, with corresponds to the example shown in the figures and described above, uses three detection means (3.2) and defines a path with three segments.

Other combinations may be possible depending on the parameters to control, the number of detection means (3.2) used and the segments into which the path of the laser beam (2.1) is divided.

In view of the above description, the minimum stages of the marking process of the invention can be defined as follows:
I. Making the laser beam (2.1) emitted by the generation and orientation means (2) impinge on a first means (3.2) for detecting the laser beam (2.1) placed on support means (3) of the part (5) of the vehicle to mark, and sending the signal detected to control means (6).
II. Making the laser beam (2.1) emitted by the means (2) for generating and orienting the laser beam (2.1) impinge on a second means (3.2) for detecting the laser beam (2.1) and sending the signal detected to control means (6).
III. Determining the possible displacement of the position of the support means (3) with respect to the theoretical position of reference with the control means (6) that have received the signals detected by the detection means (3.2),
IV. Making the laser beam (2.1) emitted by the means (2) for generating and orienting the laser beam (2.1) impinge on the vehicle part (5) to be marked in order to mark a decorative and/or indicative motif (7) on said part (5) to be marked, until completing this action.

The minimum stages of the marking process have been stated, without these stages necessarily having to follow the order in which they have been listed, so that this is not a sequence of stages but instead steps or stages that must be completed during the marking process.

Optionally, the process can comprise a stage V for making the laser beam (2.1) emitted by the means (2) for generating and orienting the laser beam (2.1) impinge on a third means (3.2) for detecting the laser beam (2.1) and sending the signal detected to the control means (6).

This optional stage V would allow checking whether the support means (3) have been displaced in space from the theoretical relative position of reference by means of the signals sent by the detection means (3.2) to the control means (6). For this purpose, the detection means (3.2) are placed on the support means (3) without being aligned with each other.

In addition, it is possible to measure the intensity of the laser beam (2.1) in stages I, II, V or any combination or reordering thereof, such that this detection of the intensity can be performed before and/or after stage IV, in order to check that it matches the intensity defined previously in the control means (6).

According to the process of the invention, for the case in which the intensity is checked at two points of the path, one before and one after the marking process performed in stage IV, such that the possible combinations of stages I, II and V are:
- I and II;
- I and V;
- II and V.

A possible variant of the process involves checking the intensity of the laser beam (2.1) at a single time of the process according to any of the stages I, II, or V, either before or after marking the part (5) performed in stage IV.

In addition, as a specific case it is possible to detect the completion of the marking process of the motif (7) to be applied on the part (5) by making the laser beam (2.1) impinge on at least one of the detection means (3.2), according to any of stages I, II, or V.

In this particular case, in order to be able to perform this detection it is necessary that the stages I, II, or V be performed after completing stage IV in which the laser beam (2.1) impinges on the part (5) to be marked.

Therefore, depending on the point of the marking process at which the laser beam (2.1) impinges on the detection means (3.2), the path of said laser beam (2.1) can be defined by at least two or three segments.

In the case of a path defined by two segments, there is a first segment (A) in which are carried out the stages I and II or the stages I, II and V, wherein the laser beam (2.1) impinges on a first detection means (3.2) and a second detection means (3.2), these stages being performed before stage IV, wherein the laser beam (2.1) impinges on the part to be marked, and a second segment (B) in which is performed stage IV, wherein the laser beam (2.1) impinges on the part (5), generating on it the motif (7).

If the path of the laser beam (2.1) is defined by three segments, there is a first segment (A) in which is performed least one of the stages I, II or V, wherein the laser beam (2.1) impinges on at least one detection means (3.2), which are performed before stage IV, wherein the laser beam (2.1) impinges on the part (5) to be marked, a second segment (B) in which is performed stage IV, wherein the laser beam (2.1) impinges on the part (5) to mark, and finally a third stage (C) in which takes place at least one of the stages I, II or V, wherein the laser beam impinges on at least one detection means (3.2), these stages being performed after stage IV, wherein the laser beam impinges on the part (5) to be marked.

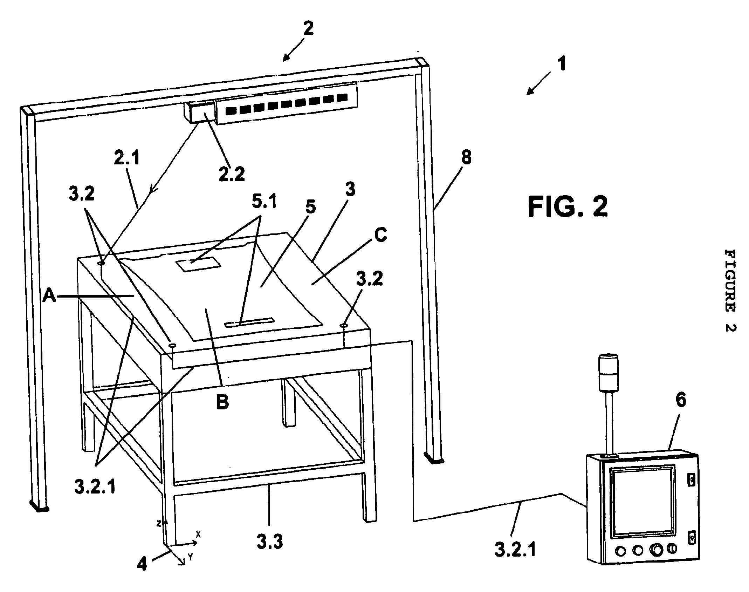

Figures 2, 3, 4, 5 and 6 represent the stages of an example of the marking process in which three detection means (3.2) are disposed on the support means (3), consisting of three temperature sensors for example, two sensors at the start of the process along a first segment (A) of the path of the laser beam (2.1) and a third sensor at the end of the marking process, along a third segment (C) of the path of the laser beam (2.1), such that the second segment (B) of the path is defined by the incidence of the laser beam (2.1) on the part to be marked.

Figure 2 shows the installation (1) at a first stage of the marking process in which the laser beam (2.1) is acting on a first detection means (3.2), in this case a first temperature sensor. In this case the temperature sensor checks on one hand that the intensity of the laser beam (2.1) is correct by comparing the temperature of the beam (2.1) with the temperatures associated to an intensity model.

On another hand, this temperature sensor determines a first point of reference to establish the position of the support means (3) with respect to the second reference means (4) and therefore with respect to the means (2) for generating and orienting the laser beam (2.1).

Both parameters measured with the first temperature sensor are sent to the control means (6) of the installation (1).

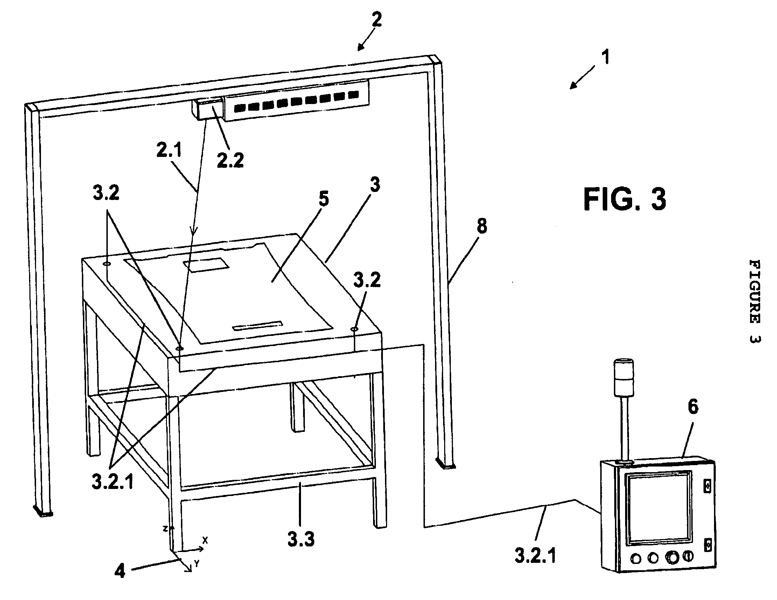

Figure 3 shows the light beam (2.1) acting on a second detection means (3.2), in this case a second temperature sensor. In this way, a second point of reference is determined that establishes whether the position of the support means (3) is correct with respect to the support plane of the support means (3), considering also the first point of reference detected with the first temperature sensor. The value of this parameter is sent to the control means (6) of the installation (1).

Therefore, if the positions determined with the first temperature sensor and with the second temperature sensor are correct, it is confirmed that the position of the support means (3) and therefore of the part (5) to mark that is placed on them is correct.

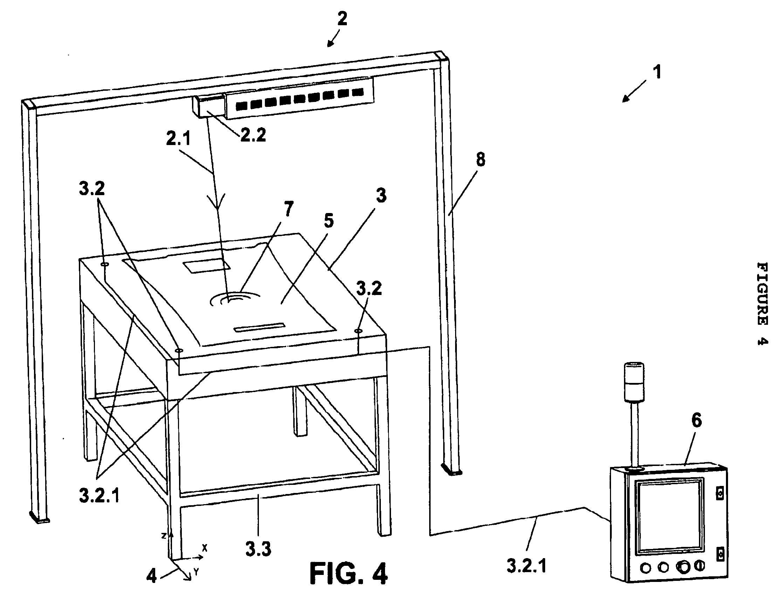

Figure 4 shows the laser beam (2.1) acting on the part (5) to apply on it the motif (7), which has been previously programmed in the software of the control means (6). This figure shows that the operation of marking the motif (7) on the part (5) has not been completed.

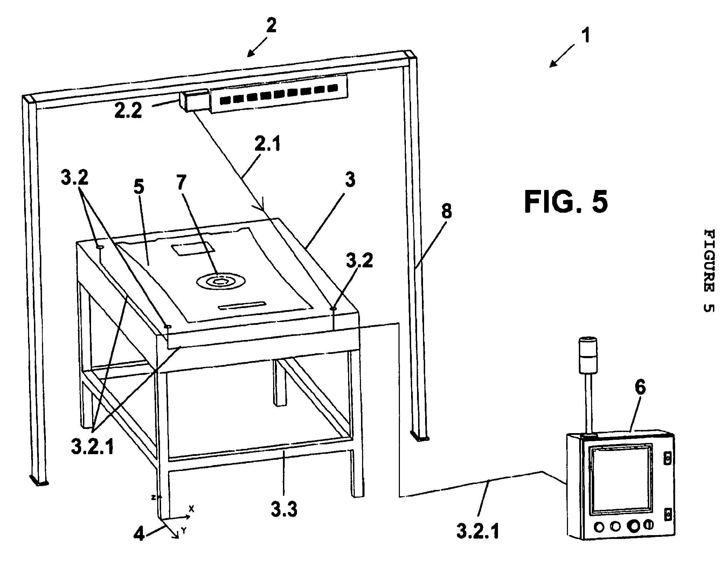

Figure 5 shows the laser beam (2.1) acting on a third detection means (3.2) which, as in the previous cases, is a third temperature sensor.

This third temperature sensor measures on one hand the intensity of the laser beam (2.1) received using the temperature of the laser beam (2.1), checking by comparing with the intensity measured by the first sensor whether the intensity of the laser beam (2.1) has remained constant during the process of marking the part (5).

On another hand, making the laser beam (2.1) impinge on the third sensor allows checking whether the marking of the motif (7) on the part (5) has finished, as shown in figure 5, where the motif (7) marked on the part (5) has been completed.

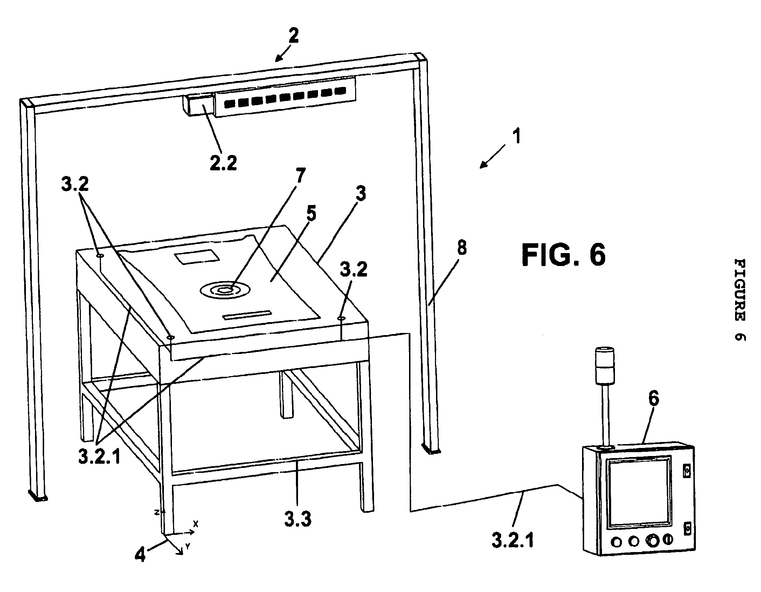

Finally, figure 6 shows the installation (1) after the process of marking the motif (7) on the part (5) has finished, the part (5) being ready to be removed to initiate a new marking process.

As when describing the marking installation (1), the stages of the marking process will depend on the parameters to control, the number of detection means (3.2) used and the segments into which the path of the laser beam (2.1) is defined.

The essence of this invention is not affected by variations in the materials, shape, size and arrangement of its component elements, described in a non-limiting manner allowing its reproduction by one skilled in the art.

## Claims

1. Installation for marking decorative and/or indicative motifs on vehicle parts by projecting a laser beam that comprises:
- Means (2) for generating and orienting the laser beam (2.1);
- Support means (3) for holding the part (5) to be marked;
- Second referencing means (4) for positioning the support means (3) with respect to the means (2) for generating and orienting the laser beam (2.1);
- Control means (6) for the means (2) for generating and orienting the laser beam (2.1);
- means (3.2) for detecting the laser beam (2.1) formed by at least a first means (3.2) for detecting the laser beam (2.1) and a second means (3.2) for detecting the laser beam (2.1), both detection means (3.2) being located on the aforementioned support means (3), such that the means (3.2) for detecting the laser beam (2.1) detect whether the relative position of the support means (3) with respect to the means (2) for generating and orienting the laser beam (2.1) is correct with respect to a theoretical relative position of reference, based on the incidence of the laser beam (2.1) on at least said two detection means (3.2) located at positions previously foreseen for this purpose
**characterised in that** the means (3.2) for detecting the laser beam (2.1) detect the completion of the operation of marking the motif (7) to be marked on the part (5) to mark by the incidence of the laser beam (2.1) on at least one of the detection means (3.2).
and **in that** there are first referencing means (3.1) for positioning the part (5) to be marked with respect to the support means (3).

2. Installation for marking decorative and/or indicative motifs on vehicle parts by projecting a laser beam according to claim 1 **characterised in that** the detection means (3.2) comprise a third detection means (3.2).

3. Installation for marking decorative and/or indicative motifs on vehicle parts by projecting a laser beam according to claim 2 **characterised in that** the means (3.2) for detecting the laser beam (2.1) detect whether the relative position of the support means (3) with respect to the generation and orientation means (2) is correct compared to a theoretical relative position of reference, based on the incidence of the laser beam (2.1) on at least a first detection means (3.2), a second detection means (3.2) and a third detection means (32), located at positions previously foreseen for this purpose.

4. Installation for marking decorative and/or indicative motifs on vehicle parts by projecting a laser beam according to any of claims 1 or 2 **characterised in that** at least one of the means (3.2) for detecting the laser beam (2.1) detect the intensity of the laser beam (2.1) when this laser beam (2.1) impinges on said at least one detection means (3.2).

5. Installation for marking decorative and/or indicative motifs on vehicle parts by projecting a laser beam according to any of claims 1 or 2 **characterised in that** the laser beam (2.1) follows a path defined by at least two segments:
- a first segment (A) of the path defined by the incidence of the laser beam (2.1) on at least a first detection means (3.2) and on at least a second detection means (3.2) before the part (5) is marked; and
- a second segment (B) of the path defined by the incidence of the laser beam (2.1) on the part (5) to mark.

6. Installation for marking decorative and/or indicative motifs on vehicle parts by projecting a laser beam according to any of claims 1 or 2 **characterised in that** the laser beam (2.1) follows a path defined by three segments:
- a first segment (A) of the path defined by the incidence of the laser beam (2.1) on at least a first detection means (3.2) before the part (5) is marked; and
- a second segment (B) of the path defined by the incidence of the laser beam (2.1) on the part (5) to mark,
- a third segment (C) defined by the incidence of the laser beam (2.1) on at least one detection means (3.2) after the part (5) is marked.

7. Installation for marking decorative and/or indicative motifs on vehicle parts by projecting a laser beam according to any of claims 1 or 2 **characterised in that** the detection means (3.2) are formed by temperature sensors or light intensity sensors.

8. Process for marking decorative and/or indicative motifs on vehicle parts by projecting a laser beam comprising the following steps:
I. Making a laser beam (2.1) emitted by the action of the means (2) for generating and orienting the laser beam (2.1) impinge on a first means (3.2) for detecting the laser beam (2.1) placed on support means (3) of the part (5) of the vehicle to mark, and sending the signal detected to control means (6);
II. Making the laser beam (2.1) emitted by the means (2) for generating and orienting the laser beam (2.1) impinge on a second means (3.2) for detecting the laser beam (2.1) and sending the signal detected to control means (6);
III. Determining the possible displacement of the position of the support means (3) with respect to the theoretical position of reference with the control means (6) that have received the signals detected by the detection means (3.2);
IV. Making a laser beam (2.1) emitted by the means (2) for generating and orienting the laser beam (2.1) impinge on the vehicle part (5) to be marked in order to mark a deceptive and/or indicative motif (7) on said part (5) to be marked, until completing this action
optionally also comprising a stage V for making the laser beam (2.1) emitted by the means (2) for generating and orienting the laser beam (2.1) impinges on a third means (3.2) for detecting the laser beam (2.1) and sending the signal detected to the control means (6) **characterised in that** in at least one of the stages I, II, or V, in which the laser beam (2.1) impinges on at least one of the detection means (3.2), the completion is detected of the marking operation of the motif (7) on the part (5) to be marked, and **in that** at least one of these stages I, II, or V is carried out after the stage IV In which the laser beam (2.1) impinges on the part (5) to mark has finished.

9. Process for marking decorative and/or indicative motifs on vehicle parts by projecting a laser beam according to claim 8 **characterised in that** it comprises a stage V for making the laser beam (2.1) emitted by the means (2) for generating and orienting the laser beam (2.1) impinge on a third means (3.2) for detecting the laser beam (2.1) and sending the signal detected to control means (6).

10. Process for marking decorative and/or indicative motifs on vehicle parts by projecting a laser beam according to claim 9 **characterised in that** the stages in which the laser beam (2.1) impinges on at least a first detection means (3.2), a second detection means (3.2) and a third detection means (3.2) allow determining the possible displacement of the relative position in space of the support means (3) with respect to the generation and orientation means (2), compared to a theoretical relative position of reference using control means (6) that have received the signals detected by the detection means (3.2).

11. Process for marking decorative and/or indicative motifs on vehicle parts by projecting a laser beam according to claims 8 or 9 **characterised in that** the intensity of the laser beam (2.1) is measured in the stages I, II, V or any combination thereof, such that the detection of the intensity can be performed before and/or after the stage IV,

12. Process for marking decorative and/or indicative motifs on vehicle parts by projecting a laser beam according to any of claims 8 or 9 **characterised in that** the laser beam (2.1) follows a path defined by two segments, a first segment (A) in which stages I and II or stages I, II and V are carried out, in each of which the laser beam (2.1) impinges on at least a first detection means (3.2) and on at least a second detection means (32), such that said first segment (A) is followed before the stage IV in which the laser beam (2.1) impinges on the part to mark, and a second segment (B) in which stage IV is carried out, in which the laser beam (2.1) impinges on the part (5) to mark.

13. Process for marking decorative and/or indicative motifs on vehicle parts by projecting a laser beam according to any of claims 8 or 9 **characterised in that** the laser beam (2.1) follows a path defined by three segments, a first segment (A) in which at least one of stages I, II or V is carried out, wherein the laser beam (2.1) impinges on at least one detection means (3.2), performed before stage IV in which the laser beam (2.1) impinges on the part (5) to mark, a second segment (B) in which stage IV is carried out, wherein the laser beam (2.1) impinges on the part (5) to mark and a third segment (C) in which at least one of stages I, II or V is carried out, wherein the laser beam (2.1) impinges on at least one detection means (3.2), performed after stage IV In which the laser beam (2.1) impinges on the part (5) to mark.

14. Process for marking decorative and/or indicative motifs on vehicle parts by projecting a laser beam according to any of claims 8 or 9 **characterised in that** the detection means (3.2) are formed by temperature sensors or light intensity sensors.

## Patentansprüche

1. Installation zur Markierung von dekorativen und/oder hinweisenden Motiven an Fahrzeugteilen durch Projektion eines Laserstrahls, die folgende Elemente umfasst:
- Mittel (2) zur Erzeugung und Ausrichtung des Laserstrahls (2.1);
- Stützmittel (Unterlage) (3) zum Halten des zu markierenden Teils (5), die erste Referenzmittel zur Positionierung dieses Teils (5) bezüglich des Stützmittels (Unterlage) (3) umfassen;
- zweite Referenzmittel (4) zur Positionierung der Stützmittel (Unterlage) (3) bezüglich der Mittel (2) zur Erzeugung und Ausrichtung des Laserstrahls (2.1);
- Kontrollmittel (6) für die Mittel (2) zur Erzeugung und Ausrichtung des Laserstrahls (2.1);
- Mittel (3.2) zur Detektion des Laserstrahls (2.1), bestehend mindestens aus ersten und zweiten derartigen Mitteln (3.2), die beide an den oben genannten Haltemitteln (3) derart angebracht sind, dass ebendiese Mittel (3.2) feststellen, ob die relative Position der Stützmittel (Unterlage) (3) bezüglich der erwähnten Mittel (2) korrekt ist, verglichen mit einer theoretischen relativen Referenzposition, die auf dem Einfall des Laserstrahls (2.1) auf mindestens den beiden Detektionsmitteln besagten (3.2) basiert, welche zu diesem Zweck an vorher bestimmten Positionen angebracht werden, **dadurch gekennzeichnet, dass** die Mittel (3.2) einen fertiggestellten Markierungsvorgang des Motivs (7) auf dem Teil (5) feststellen, was über eine Markierung anhand des einfallenden Laserstrahls (2.1) auf mindestens einem Detektionsmittel (3.2) geschieht.

2. Installation zur Markierung von dekorativen und/oder hinweisenden Motiven an Fahrzeugteilen durch Projektion eines Laserstrahls nach Anspruch 1, **dadurch gekennzeichnet, dass** die Detektionsmittel (3.2) außerdem dritte Detektionsmittel (3.2) umfassen.

3. Installation zur Markierung von dekorativen und/oder hinweisenden Motiven an Fahrzeugteilen durch Projektion eines Laserstrahls nach Anspruch 2, **dadurch gekennzeichnet, dass** die Mittel (3.2) zur Detektion des Laserstrahls (2.1) feststellen, ob die relative Position der Stützmittel (Unterlage) (3) bezüglich der Erzeugungs-und Ausrichtungsmittel (2) korrekt ist, verglichen mit einer theoretischen relativen Referenzposition, die auf dem Einfall des Laserstrahls (2.1) auf mindestens den ersten, zweiten und dritten Detektionsmitteln (3.2) basiert, welche zu diesem Zweck an vorher bestimmten Positionen angebracht werden.

4. Installation zur Markierung von dekorativen und/oder hinweisenden Motiven an Fahrzeugteilen durch Projektion eines Laserstrahls nach Anspruch 1 oder 2, **dadurch gekennzeichnet, dass** mindestens eines der Mittel (3.2) zur Detektion des Laserstrahls (2.1) die Intensität dieses auf mindestens ein Detektionsmittel (3.2) auftreffenden Strahls (2.1) misst.

5. Installation zur Markierung von dekorativen und/oder hinweisenden Motiven an Fahrzeugteilen durch Projektion eines Laserstrahls nach Anspruch 1 oder 2, **dadurch gekennzeichnet, dass** der Laserstrahl (2.1) einen Weg verfolgt, der mindestens durch zwei Strecken festgelegt ist:
- eine erste Wegstrecke (A), die durch den Einfall des Laserstrahls (2.1) auf mindestens erste und zweite Detektionsmittel (3.2) gegeben ist, bevor das Teil (5) markiert wird, und
- eine zweite Wegstrecke (B), die durch den Einfall des Laserstrahls (2.1) auf das zu markierende Teil (5) bestimmt ist.

6. Installation zur Markierung von dekorativen und/oder hinweisenden Motiven an Fahrzeugteilen durch Projektion eines Laserstrahls nach Anspruch 1 oder 2, **dadurch gekennzeichnet, dass** der Laserstrahl (2.1) einen Weg verfolgt, der durch drei Strecken festgelegt ist:
- eine erste Wegstrecke (A), die durch den Einfall des Laserstrahls (2.1) mindestens auf erste Detektionsmittel (3.2) gegeben ist, bevor das Teil (5) markiert wird;
- eine zweite Wegstrecke (B), die durch den Einfall des Laserstrahls (2.1) auf das zu markierende Teil (5) bestimmt ist, und
- eine dritte Wegstrecke (C), die durch den Einfall des Laserstrahls (2.1) auf mindestens ein Detektionsmittel (3.2) gegeben ist, nachdem das Teil (5) markiert wurde.

7. Installation zur Markierung von dekorativen und/oder hinweisenden Motiven an Fahrzeugteilen durch Projektion eines Laserstrahls nach Anspruch 1 oder 2, **dadurch gekennzeichnet, dass** Temperaturfühler oder Lichtintensitätssensoren die Detektionsmittel (3.2) bilden.

8. Verfahren zur Markierung von dekorativen und/oder hinweisenden Motiven an Fahrzeugteilen durch Projektion eines Laserstrahls, das die folgenden Schritte umfasst:
I. Emission eines Laserstrahls (2.1) durch die Mittel (2) zur Erzeugung und Ausrichtung dieses Strahls, der auf erste Detektionsmittel (3.2) auftrifft, die an den Haltemitteln (3) des zu markierenden Fahrzeugteils (5) angebracht sind, und Übermittlung des aufgenommenen Signals an Kontrollmittel (6).
II. Emission eines Laserstrahls (2.1) durch die Mittel (2) zur Erzeugung und Ausrichtung dieses Strahls, der auf zweite Detektionsmittel (3.2) auftrifft, und Übermittlung des aufgenommenen Signals an Kontrollmittel (6).
III. Bestimmung einer eventuellen Verschiebung der Stützmittel (Unterlage) (3) gegenüber der theoretischen Referenzposition durch die Kontrollmittel (6), welche die von den Detektionsmitteln (3.2) aufgenommenen Signale empfangen.
IV. Emission eines Laserstrahls (2.1) durch die Mittel (2) zur Erzeugung und Ausrichtung dieses Strahls, der auf das zu markierende Fahrzeugteil (5) auftrifft und auf diesem Teil ein dekoratives oder hinweisendes Motiv (7) markiert und den Ablauf abschließt, wobei dieser Vorgang als Option auch eine Phase Nr. V beinhalten kann, welche die Emission eines Laserstrahls (2.1) durch die Strahlerzeugungs- und -ausrichtungsmittel (2) umfasst, wonach der Strahl auf dritte Detektionsmittel (3.2) auftrifft, die das aufgenommene Signal an Kontrollmittel (6) senden, **dadurch gekennzeichnet, dass** in mindestens einer der Phasen I, II oder V, in welchen der Laserstrahl (2.1) auf mindestens ein Detektionsmittel (3.2) auftrifft, die Fertigstellung des Markiervorgangs des dekorativen und/oder hinweisenden Motivs (7) auf dem zu markierenden Teil (5) festgestellt wird, wobei mindestens eine der Phasen I, II oder V erst nach Abschluss der Phase IV abläuft, in welcher der Laserstrahl (2.1) auf das zu markierende Teil (5) auftrifft.

9. Verfahren zur Markierung von dekorativen und/oder hinweisenden Motiven an Fahrzeugteilen durch Projektion eines Laserstrahls nach Anspruch 8, das eine Phase V umfasst, in welcher der durch die Mittel (2) zur Erzeugung und Ausrichtung des Laserstrahls (2.1) emittierte Strahl auf dritte Detektionsmittel (3.2) auftrifft und das aufgenommene Signal an Kontrollmittel (6) gesendet wird.

10. Verfahren zur Markierung von dekorativen und/oder hinweisenden Motiven an Fahrzeugteilen durch Projektion eines Laserstrahls nach Anspruch 9, **dadurch gekennzeichnet, dass** während der Phasen, in welchen der Laserstrahl (2.1) mindestens auf die ersten Detektionsmittel (3.2) auftrifft, mithilfe der zweiten und dritten Detektionsmittel (3.2) sich eine eventuelle relative Positionsverschiebung der Stützmittel (Unterlage) (3) bezüglich der Erzeugungs- und Ausrichtungsmittel (2) feststellen lässt, was im Vergleich zu einer theoretischen Referenzposition durch die Kontrollmittel (6) geschieht, welche die von den Detektionsmitteln (3.2) aufgenommenen Signale empfangen.

11. Verfahren zur Markierung von dekorativen und/oder hinweisenden Motiven an Fahrzeugteilen durch Projektion eines Laserstrahls nach Anspruch 8 oder 9, **dadurch gekennzeichnet, dass** die Intensitätsmessung des Laserstrahls (2.1) in den Phasen I, II, V oder in einer beliebigen Kombination dieser Phasen derart erfolgt, dass diese Messung vor oder nach Phase IV ablaufen kann.

12. Verfahren zur Markierung von dekorativen und/oder hinweisenden Motiven an Fahrzeugteilen durch Projektion eines Laserstrahls nach den Ansprüchen 8 oder 9, **dadurch gekennzeichnet, dass** zwei Strecken den Weg des Laserstrahls (2.1) bestimmen, nämlich eine erste Wegstrecke (A), welche die Phasen I und II oder I, II und V umfasst, in denen der Laserstrahl (2.1) jeweils auf mindestens erste und zweite Detektionsmittel (3.2) derart auftrifft, dass er diese erste Wegstrecke (A) vor der Phase IV zurücklegt, in welcher der Laserstrahl (2.1) auf das zu markierende Teil auftrifft; und andererseits eine zweite Wegstrecke (B), an der die Phase IV abläuft und der Laserstrahl (2.1) auf das zu markierende Teil (5) auftrifft.

13. Verfahren zur Markierung von dekorativen und/oder hinweisenden Motiven an Fahrzeugteilen durch Projektion eines Laserstrahls nach Anspruch 8 oder 9, **dadurch gekennzeichnet, dass** zwei Strecken den Weg des Laserstrahls (2.1) bestimmen, nämlich eine erste Wegstrecke (A), die mindestens eine der Phasen I, II oder V umfasst, in welcher der Laserstrahl (2.1) auf mindestens ein Detektionsmittel (3.2) auftrifft, was vor der Phase IV geschieht, in welcher der Strahl (2.1) auf das zu markierende Teil auftrifft; außerdem eine zweite Wegstrecke (B), an der die Phase IV abläuft und der Laserstrahl (2.1) auf das zu markierende Teil (5) auftrifft, sowie eine dritte Wegstrecke (C), in welcher der Laserstrahl unter Ausführung mindestens einer der Phasen I, II oder V auf mindestens ein Detektionsmittel (3.2) auftrifft, was nach Phase IV geschieht, in welcher der Laserstrahl (2.1) auf das zu markierende Teil (5) auftrifft.

14. Verfahren zur Markierung von dekorativen und/oder hinweisenden Motiven an Fahrzeugteilen durch Projektion eines Laserstrahls nach Anspruch 8 oder 9, **dadurch gekennzeichnet, dass** Temperaturfühler oder Lichtintensitätssensoren die Detektionsmittel (3.2) bilden.

## Revendications

1. Installation destinée à marquer des motifs décoratifs et/ou indicatifs sur des pièces de véhicule en projetant un faisceau laser qui comprend :
- un moyen (2) permettant de générer et d'orienter le faisceau laser (2.1),
- un moyen formant support (3) permettant de maintenir la pièce (5) à marquer,
- un second moyen de référencement (4) permettant de positionner le moyen formant support (3) par rapport au moyen (2) permettant de générer et d'orienter le faisceau laser (2.1),
- un moyen de commande (6) pour le moyen (2) permettant de générer et d'orienter le faisceau laser (2.1),
- un moyen (3.2) permettant de détecter le faisceau laser (2.1) formé par au moins un premier moyen (3.2) destiné à détecter le faisceau laser (2.1) et par un deuxième moyen (3.2) destiné à détecter le faisceau laser (2.1), les deux moyens de détection (3.2) étant situés sur le moyen formant support (3) mentionné précédemment de telle sorte que les moyens (3.2) destinés à détecter le faisceau laser (2.1) détectent si la position relative du moyen formant support (3) par rapport au moyen (2) permettant de générer et d'orienter le faisceau laser (2.1) est correcte par rapport à une position relative théorique de référence, sur la base de l'incidence du faisceau laser (2.1) sur au moins lesdits deux moyens de détection (3.2) situés à des positions précédemment prévues à cette fin,
**caractérisée en ce que** les moyens (3.2) destinés à détecter le faisceau laser (2.1) détectent l'achèvement de l'opération de marquage du motif (7) à marquer sur la pièce (5) à marquer grâce à l'incidence du faisceau laser (2.1) sur au moins l'un des moyens de détection (3.2),
et **en ce qu'**il existe un premier moyen de référencement (3.1) permettant de positionner la pièce (5) à marquer par rapport au moyen formant support (3).

2. Installation destinée à marquer des motifs décoratifs et/ou indicatifs sur des pièces de véhicule en projetant un faisceau laser conforme à la revendication 1, **caractérisée en ce que** le moyen de détection (3.2) comprend un troisième moyen de détection (3.2).

3. Installation destinée à marquer des motifs décoratifs et/ou indicatifs sur des pièces de véhicule en projetant un faisceau laser conforme à la revendication 2, **caractérisée en ce que** le moyen (3.2) permettant de détecter le faisceau laser (2.1) détecte si la position relative du moyen formant support (3), par rapport au moyen de génération et d'orientation (2), est correcte par comparaison à une position relative théorique de référence, sur la base de l'incidence du faisceau laser (2.1) sur un au moins un premier moyen de détection (3.2), un deuxième moyen de détection (3.2) et un troisième moyen de détection (3.2) situés à des positions prévues précédemment à cette fin.

4. Installation destinée à marquer des motifs décoratifs et/ou indicatifs sur des pièces de véhicule en projetant un faisceau laser conforme à l'une quelconque des revendications 1 ou 2, **caractérisée en ce qu'**au moins l'un des moyens (3.2) permettant de détecter le faisceau laser (2.1) détecte l'intensité du faisceau laser (2.1) lorsque ce faisceau laser (2.1) tombe sur ledit ou lesdits moyens de détection (3.2).

5. Installation destinée à marquer des motifs décoratifs et/ou indicatifs sur des pièces de véhicule en projetant un faisceau laser conforme à l'une quelconque des revendications 1 ou 2, **caractérisée en ce que** le faisceau laser (2.1) suit un trajet défini par au moins deux segments :
- un premier segment (A) du trajet défini par l'incidence du faisceau laser (2.1) sur au moins un premier moyen de détection (3.2) et sur au moins un deuxième moyen de détection (3.2) avant que la pièce (5) soit marquée, et
- un deuxième segment (B) du trajet défini par l'incidence du faisceau laser (2.1) sur la pièce (5) à marquer.

6. Installation destinée à marquer des motifs décoratifs et/ou indicatifs sur des pièces de véhicule en projetant un faisceau laser conforme à l'une quelconque des revendications 1 ou 2, **caractérisée en ce que** le faisceau laser (2.1) suit un trajet défini par trois segments :
- un premier segment (A) du trajet défini par l'incidence du faisceau laser (2.1 sur au moins un premier moyen de détection (3.2) avant que la pièce (5) soit marquée, et
- un deuxième segment (B) du trajet défini par l'incidence du faisceau laser (2.1) sur la pièce (5) à marquer,
- un troisième segment (C) défini par l'incidence du faisceau laser (2.1) sur au moins un moyen de détection (3.2) après que la pièce (5) est marquée.

7. Installation destinée à marquer des motifs décoratifs et/ou indicatifs sur des pièces de véhicule en projetant un faisceau laser conforme à l'une quelconque des revendications 1 ou 2, **caractérisée en ce que** les moyens de détection (3.2) sont formés par des capteurs de température ou des capteurs d'intensité lumineuse.

8. Processus de marquage de motifs décoratifs et/ou indicatifs sur des pièces de véhicule en projetant un faisceau laser comprenant les étapes suivantes :
I. Faire tomber un faisceau laser (2.1), émis par l'action du moyen (2) permettant de générer et d'orienter le faisceau laser (2.1), sur un premier moyen (3.2) destiné à détecter le faisceau laser (2.1) placé sur un moyen formant support (3) de la pièce (5) du véhicule à marquer, et envoyer le signal détecté à un moyen de commande (6),
II. Faire tomber le faisceau laser (2.1), émis par le moyen (2) permettant de générer d'orienter le faisceau laser (2.1), sur un deuxième moyen (3.2) destiné à détecter le faisceau laser (2.1), et envoyer le signal détecté à un moyen de commande (6),
III. Déterminer le déplacement possible de position du moyen formant support (3) par rapport à la position théorique de référence avec le moyen de commande (6) qui a reçu les signaux détectés par le moyen de détection (3.2),
IV. Faire tomber un faisceau laser (2.1), émis par le moyen (2) permettant de générer et d'orienter le faisceau laser (2.1), sur la pièce de véhicule (5) à marquer afin de marquer un motif décoratif et/ou indicatif (7) sur ladite pièce (5) à marquer jusqu'à l'achèvement de cette action, comprenant également en option une étape V permettant de faire tomber le faisceau laser (2.1), émis par le moyen (2) permettant de générer et d'orienter le faisceau laser (2.1), sur un troisième moyen (3.2) destiné à détecter le faisceau laser (2.1) et envoyer le signal détecté au moyen de commande (6), étapes **caractérisées en ce que** lors d'au moins l'une des étapes I, II ou V, dans laquelle le faisceau laser (2.1) tombe sur au moins l'un des moyens de détection (3.2), l'achèvement soit détecté concernant l'opération de marquage du motif (7) sur la pièce (5) à marquer, et **en ce qu'**au moins l'une de ces étapes I, II ou V soit exécutée après l'étape IV soit finie, dans laquelle le faisceau laser (2.1) tombe sur la pièce (5) à marquer.

9. Processus de marquage de motifs décoratifs et/ou indicatifs sur des pièces de véhicule en projetant un faisceau laser conforme à la revendication 8, **caractérisé en ce qu'**il comprend une étape V permettant de faire tomber le faisceau laser (2.1), émis par le moyen (2) permettant de générer et d'orienter le faisceau laser (2.1), sur un troisième moyen (3.2) destiné à détecter le faisceau laser (2.1) et d'envoyer le signal détecté à un moyen de commande (6).

10. Processus de marquage de motifs décoratifs et/ou indicatifs sur des pièces de véhicule en projetant un faisceau laser conforme à la revendication 9, **caractérisé en ce que** les étapes dans lesquelles le faisceau laser (2.1) tombe sur au moins un premier moyen de détection (3.2), un deuxième moyen de détection (3.2) et un troisième moyen de détection (3.2) permet la détermination du déplacement possible de la position relative dans l'espace du moyen formant support (3) par rapport au moyen de génération et d'orientation (2) par comparaison à une position relative théorique de référence en utilisant le moyen de commande (6) qui a reçu les signaux détectés par le moyen de détection (3.2).

11. Processus de marquage de motifs décoratifs et/ou indicatifs sur des pièces de véhicule en projetant un faisceau laser conforme l'une quelconque des revendications 8 ou 9, **caractérisé en ce que** l'intensité du faisceau laser (2.1) est mesurée lors des étapes I, II, V ou lors de toute combinaison de celles-ci de telle sorte que la détection de l'intensité puisse être effectuée avant et/ou après l'étape IV.

12. Processus de marquage de motifs décoratifs et/ou indicatifs sur des pièces de véhicule en projetant un faisceau laser conforme à l'une quelconque des revendications 8 ou 9, **caractérisé en ce que** le faisceau laser (2.1) suit un trajet défini par deux segments, un premier segment (A) dans lequel les étapes I et II ou les étapes I, II ou V sont exécutées, dans chacune desquelles le faisceau laser (2.1) tombe sur au moins un premier moyen de détection (3.2) et sur au moins un deuxième moyen de détection (3.2) de telle sorte que ledit premier segment (A) soit suivi avant l'étape IV, dans laquelle le faisceau laser (2.1) tombe sur la pièce à marquer, et un deuxième segment (B) dans lequel l'étape IV est exécutée, dans laquelle le faisceau laser (2.1) tombe sur la pièce (5) à marquer.

13. Processus de marquage de motifs décoratifs et/ou indicatifs sur des pièces de véhicule en projetant un faisceau laser conforme à l'une quelconque des revendications 8 ou 9, **caractérisé en ce que** le faisceau laser (2.1) suit un trajet défini par trois segments, un premier segment (A) dans lequel au moins l'une des étapes I, II ou V est exécutée, le faisceau laser (2.1) tombant sur au moins un moyen de détection (3.2), effectuée avant l'étape IV dans laquelle le faisceau laser (2.1) tombe sur la pièce (5) à marquer, un second segment (B) dans lequel l'étape IV est exécutée, le faisceau laser (2.1) tombant sur la pièce (5) à marquer, et un troisième segment (C) dans lequel au moins l'une des étapes I, II ou V est exécutée, le faisceau laser (2.1) tombant sur au moins un moyen de détection (3.2), effectuée après l'étape IV dans laquelle le faisceau laser (2.1) tombe sur la pièce (5) à marquer.

14. Processus de marquage de motifs décoratifs et/ou indicatifs sur des pièces de véhicule en projetant un faisceau laser conforme à l'une quelconque des revendications 8 ou 9, **caractérisé en ce que** les moyens de détection (3.2) sont formés par des capteurs de température ou des capteurs d'intensité lumineuse.
